# EUROPEAN PATENT SPECIFICATION

(11) **EP 3 100 517 B1**
(45) Date of publication and mention of the grant of the patent: **21.10.2020**
(21) Application number: 15743766.6
(22) Date of filing: 14.01.2015
(51) Int. Cl.: H04W 36/00, H04W 76/15, H04W 76/16, H04W 84/12, H04W 88/06

(54) **SYSTEMS, DEVICES AND COMPUTER-READABLE MEDIUM FOR APPLICATION SPECIFIC ROUTING IN DUAL CONNECTIVITY**
SYSTEME, VORRICHTUNGEN UND COMPUTERLESBARE MEDIEN FÜR ANWENDUNGSSPEZIFISCHE LEITWEGLENKUNG IN EINER DOPPELKONNEKTIVITÄT
SYSTÈMES, DISPOSITIFS ET SUPPORT LISIBLE PAR ORDINATEUR DE ROUTAGE SPÉCIFIQUE À L'APPLICATION DANS UN SYSTÈME À DOUBLE CONNECTIVITÉ

(30) Priority: 30.01.2014 US 201461933865 P; 23.12.2014 US 201414580797
(43) Date of publication of application: 07.12.2016
(73) Proprietor: Intel IP Corporation, Santa Clara, CA 95054 (US)
(72) Inventor: YIU, Candy, Portland, OR 97201 (US); PINHEIRO, Ana Lucia A., Breinigsville, Pennsylvania 18031 (US)
(74) Representative: Barton, Russell Glen
(86) International application number: PCT/US2015/011427
(87) International publication number: WO 2015/116387

(56) References cited:
- WO-A2-2012/177763
- US-A1- 2010 034 083
- US-A1- 2013 322 347
- US-B1- 8 351 327
- INTEL CORPORATION: "Impacts of Splitting a Single EPS Bearer between Two (or more) eNBs", 3GPP DRAFT; R2-131529-EPSBEARERSPLIT, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Chicago, USA; 20130415 - 20130419 17 April 2013 (2013-04-17), XP050699572, Retrieved from the Internet: URL:http://www.3gpp.org/ftp/tsg_ran/WG2_RL 2/TSGR2_81bis/Docs/ [retrieved on 2013-04-17]
- BLACKBERRY UK LIMITED: "Comparison of solutions: IP flow routing capability", 3GPP DRAFT; R2-132771, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Barcelona, Spain; 20130819 - 20130823 10 August 2013 (2013-08-10), XP050718512, Retrieved from the Internet: URL:http://www.3gpp.org/ftp/tsg_ran/WG2_RL 2/TSGR2_83/Docs/ [retrieved on 2013-08-10]
- NOKIA SIEMENS NETWORKS ET AL.: 'Data split options and considerations on U-plane protocol architecture for dual-connectivity' R2-131054, 3GPP TSG-RAN WG2 MEETING #81BIS, [Online] 15 April 2013, CHICAGO, USA, XP050699230 Retrieved from the Internet: <URL:http://www.3gpp.org/ftp/tsg-ran/wg2_21 2/TSGR2-81bis/Docs>
- INTEL CORPORATION: 'Impacts of Splitting a Single EPS Bearer between Two (or more) eNBs' R2-131401, 3GPP TSG RAN WG2 MEETING #81BIS, [Online] 15 April 2013, CHICAGO, USA, XP050699523 Retrieved from the Internet: <URL:http://www.3gpp.org/ftp/tsg_ran/wg2_r1 2/TSGR2_81bis/Docs>
- NOKIA CORPORATION ET AL.: 'Discussion on small cells dual connectivity' R2-130453, 3GPP TSG-RAN WG2 MEETING #81, [Online] 28 January 2013, MALTA, XP050668368 Retrieved from the Internet: <URL:http://www.3gpp.org/ftp/tsg_ran/wg2_r1 2/TSGR2_81/Docs>

## Description

### Technical Field

The present disclosure relates to dual connectivity in wireless devices.

US 2013/0322347 A1 provides methods that allow a mobile device to communicate over multiple access technologies at the same time, including a cellular access technology, such as LTE, and via an untrusted WLAN access. The untrusted access is initiated via internet key exchange. The mobile device uses the same IP address over both access technologies.

3GPP Tdoc. R2-131054, "Data split options and considerations on U-plane protocol architecture for dual-connectivity", 3GPP TSG-RAN WG2 Meeting #81bis, April 2013, discusses U-plane aspects of dual-connectivity with non-ideal backhaul between macro eNB (MeNB) and small cell eNB (SeNB). Different U-plane data split options for EPS bearers and protocol architectures for dual-connectivity are presented, their main advantages and disadvantages are discussed. The authors focus on dual-connectivity with dual radio connection (i.e. UE has physical radio connection to two different network nodes and can receive/transmit U-plane data from/to both MeNB and SeNB - though not necessarily at the same time).

3GPP Tdoc. R2-131529, "Impacts of Splitting a Single EPS Bearer between Two (or more) eNBs", 3GPP TSG-RAN WG2 Meeting #81bis, April 2013, discusses whether dual connectivity should allow for a single EPS bearer to be split between two eNBs and the implication of this slit bearer.

WO 2012/177763 A2 relates to bandwidth management, BWM, wherein packets of traffic may be inspected to identify a video stream and/or video sub-streams. The video sub-streams may be partitioned for transmission.

### Summary

The invention is defined by the independent claims. Advantageous embodiments are subject to the dependent claims.

### Brief Description of the Drawings

Figure 1 is a diagram illustrating a wireless dual connectivity system.
Figure 2 is a diagram illustrating a protocol stack in single connectivity.
Figure 3 is a diagram of a protocol stack in dual connectivity.
Figure 4 is a diagram of an alternate protocol stack in dual connectivity.
Figure 5 is diagram illustrating filtering based on application.
Figure 6 is a diagram illustrating multiple traffic flow template (TFT) assignment consistent with embodiments disclosed herein.
Figure 7 is a diagram illustrating a wireless communication system.
Figure 8 is a data flow diagram illustrating data flow of an evolved packet core (EPC) in a dual connectivity environment consistent with embodiments disclosed herein.
Figure 9 is a data flow diagram illustrating data flow between a UE and Serving Gateway/Packet Data Network (PDN) Gateway (S/P-GW) in dual connectivity.
Figure 10 is a flow chart illustrating a method for application specific routing consistent with embodiments disclosed herein.
Figure 11 is a schematic diagram of a mobile device consistent with embodiments disclosed herein.

### Detailed Description of Preferred Embodiments

A detailed description of systems and methods consistent with embodiments of the present disclosure and examples useful for understanding the invention is provided below. In addition, while numerous specific details are set forth in the following description in order to provide a thorough understanding of the embodiments disclosed herein, some embodiments can be practiced without some or all of these details. Moreover, for the purpose of clarity, certain technical material that is known in the related art has not been described in detail in order to avoid unnecessarily obscuring the disclosure.

Techniques, apparatus and methods are disclosed that enable a wireless service provider to route packets in a dual connectivity wireless system based on application (instead of solely on bearers). For example, an evolved Node B (also commonly denoted as Node B, enhanced Node B, eNodeB, or eNB) can split a bearer between a master eNB (MeNB) and a secondary wireless connection (such as a secondary eNB (SeNB)). User equipment (UE) can connect to both a MeNB and a SeNB and split a bearer based on application type. Instead of basing data forwarding on a bearer, packet routing can be based on other attributes (such as IP address, application, application type, etc.). This dual connectivity allows MeNB to schedule data forwarding based on application. Data packets assigned to a bearer can be divided among the MeNB and SeNB based on desirable attributes of the MeNB and SeNB for an application (such as reliability or speed).

Traditionally, a UE is connected to one eNB. In dual connectivity the UE can connect to more than one eNB (referred to here as MeNB and SeNB) simultaneously to increase a UE data rate and offload transmissions to Macro cells. For example, the MeNB determines to add a SeNB and selected bearers are serviced through the MeNB and others through the SeNB.

According to the invention, it can be beneficial to perform bearer separations based on applications. Without additional information, an eNB does not have knowledge of an application type such as voice, video or SMS. Instead, each bearer is associated with a quality of service class identifier (QCI) for quality of service (QoS). However, QCI levels are not currently application specific and for QCI levels from QCI=5 onwards many different application groups are mapped into the same QCI level. In a dual connectivity case, the eNB has very limited ability today to forward data based on the applications mapped to the bearers.

Five example embodiments and examples are described below that can be used for application specific routing (although these embodiments and examples are not meant to be exhaustive and combinations thereof can be created): (1) a QCI table can be extended; (2) an application table can be created; (3) TFTs can be extended; (4) multiple TFTs can be used for a single bearer and (5) other networks can be used.

A packet splitter (such as a packet filter, packet router, packet inspector, etc.) can be added before, in or after a packet data convergence protocol (PDCP) layer. In some embodiments, a filter is added before a PDCP layer (such as on top of the PDCP layer or in a gateway such as a serving gateway (S-GW, SGW)) or a serving gateway/packet data network (PND) gateway (SPGW or S/P-GW). In other embodiments, a filter resides in (or with) the PDCP layer. As packets arrive to the packet filter, the packets can routed through a wireless link based on their association with an application (or part of an application). For example, a packet filter can be configured to route a voice portion of a video chat application through a MeNB, while a video portion can be configured to be routed through a SeNB.

According to the invention, one given bearer is split between the MeNB and SeNB. A packet filter splits a stream of packets from one bearer to MeNB and SeNB based on characteristics (IP address, extended QCI level, application table, etc.).

In some embodiments and examples, the filtering is based on an application table. An application table can contain a list of applications matched with IP addresses. This table can then be used by a packet filter to determine which wireless link, connection, eNB, medium or set of frequencies should be used to transmit a packet.

It should be recognized that transmission over a wireless link can be expressed in different ways. In many instances, transmission can be over a wireless link, connection, eNB, medium or set of frequencies. While specific embodiments may be described using one set of terminology, it should be recognized that other terminology can be applicable. A wireless medium is a link between two wireless systems that can transmit information. More than one wireless mediums (or media) can exist, as each medium is associated with a link (such as different wireless frequencies, different link technologies, etc.)

The filtering can be based on an extended QCI table. A QCI table can be extended to include applications. Each application type can be assigned a QCI value. A packet filter can examine a QCI value of the packet within a stream and make a determination of the routing of the packet over a primary wireless link or secondary wireless link.

According to the invention, current traffic flow templates (TFTs) are extended to allow multiple TFTs to be mapped to a single bearer. A network sets two or more TFTs to map to a single bearer. Packets in the split bearer map into one of the two TFTs.

In some embodiments, the packet filter is not limited to long term evolution (LTE) networks, but can be applied to other links, such as a wireless local area network (WLAN) link. For example, an eNB can configure associated TFTs and packet filters on the LTE bearer and a WLAN link.

Multiple TFTs are configured for a single bearer. For example, a bearer can be established with a first TFT. A second TFT can be created such that packets that are within the first TFT and also match a second TFT can be routed according to the second TFT.

This data routing can use wireless mobile communication technology between a UE and one or more base stations. Wireless mobile communication technology uses various standards and protocols to transmit data between a base station and a wireless mobile device. Wireless communication system standards and protocols can include the 3rd Generation Partnership Project (3GPP) long term evolution (LTE); the Institute of Electrical and Electronics Engineers (IEEE) 802.16 standard, which is commonly known to industry groups as worldwide interoperability for microwave access (WiMAX); and the IEEE 802.11 standard, which is commonly known to industry groups as Wi-Fi. Mobile broadband networks can include various high speed data technologies, such as 3GPP LTE systems. In 3GPP radio access networks (RANs) in LTE systems, the base station can include Evolved Universal Terrestrial Radio Access Network (E-UTRAN) Node Bs (also commonly denoted as evolved Node Bs, enhanced Node Bs, eNodeBs, or eNBs) and/or Radio Network Controllers (RNCs) in an E-UTRAN, which communicate with a wireless communication device, known as user equipment (UE). The eNBs allow the UE to connect to further network infrastructure, such as an evolved packet core (EPC), which can include gateways (such as an S-GW) and applications and/or services (including Internet access).

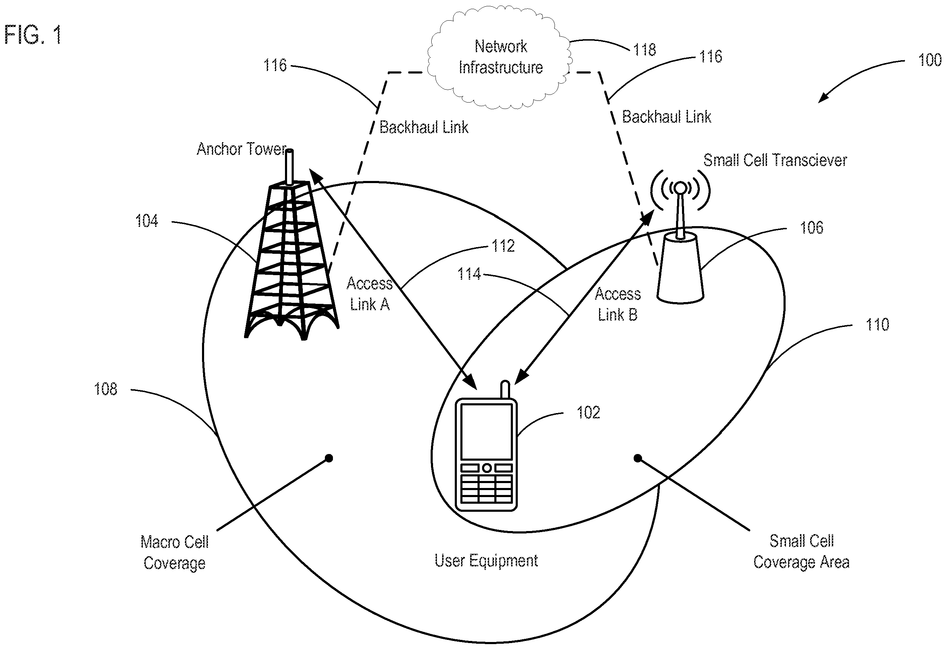

Figure 1 shows an example of a portion of a radio access network (RAN) system 100 that includes a single cellular air interface (such as an LTE/LTE-Advanced access link) being provided between the anchor tower 104 (such as an eNB) and the UE 102 (i.e., on Access Link A 112), and an air interface (a supplemental network interface such as a small cell based interface or wireless local area network (WLAN) based interface) being provided between the small cell transceiver 106 and the UE 102 (i.e., on Access Link B 114). UE 102 is located within macro cell coverage 108 and small cell coverage area 110. Anchor tower 104 determines that connection with a small cell transceiver 106 will be beneficial to a user of the UE 102. The UE 102 can retain Access Link A 112 to anchor tower 104. The anchor tower 104 and UE 102 can offload some or part of wireless services onto Access Link B 114. In some embodiments Access Link A 112 and Access Link B 114 use a same frequency and technology. In other embodiments, Access Link A 112 and Access Link B 114 use different frequencies (e.g., LTE licensed frequencies and unlicensed frequencies) and different link technology (e.g., LTE and WLAN). In other embodiments, Access Link A 112 and Access Link B 114 use different frequencies and similar link technology (e.g., LTE and LTE over mmWave).

Data can be routed over Access Link A 112 or Access Link B based on a packet filter determination. A gateway in the network infrastructure 118 can transmit packets over a backhaul link 116 to a MeNB (such as anchor tower 104). The MeNB can determine that the UE 102 should connect to a SeNB (such as small cell transceiver 106). The MeNB can instruct the UE 102 to connect to the SeNB. As a result a packet filter can be enabled on the MeNB and SeNB. Packets can be routed through the MeNB or SeNB based on application. A packet can be received by the MeNB and then routed to the SeNB. Alternatively, a packet filter can operate above the level of the eNB and routed to the MeNB or SeNB based on an identifier that correlates with an application.

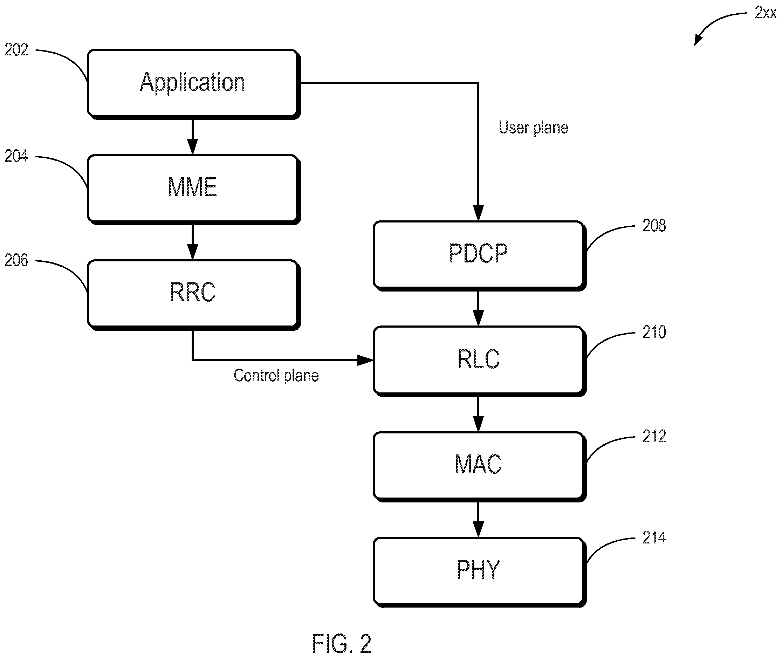

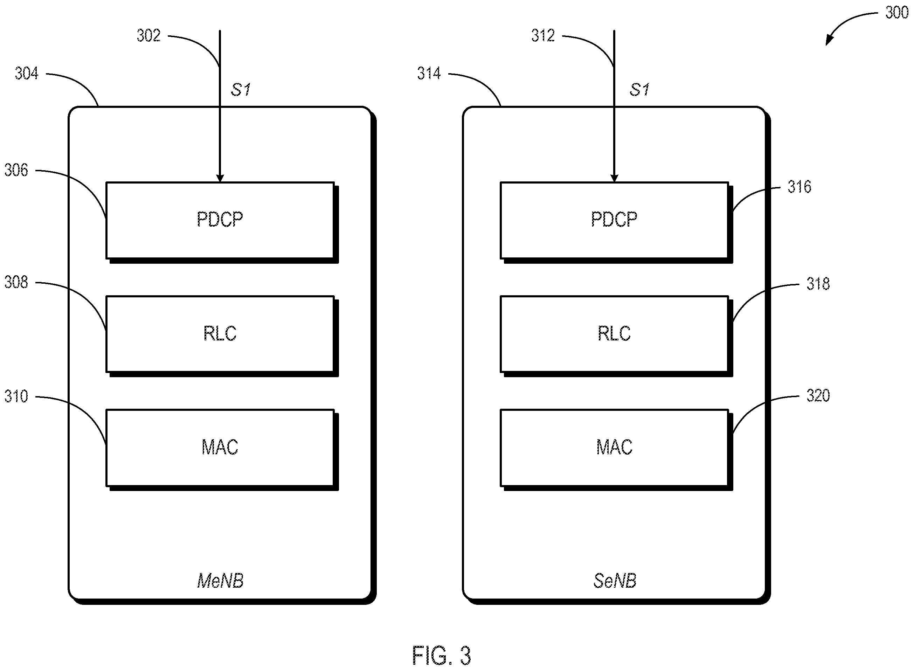

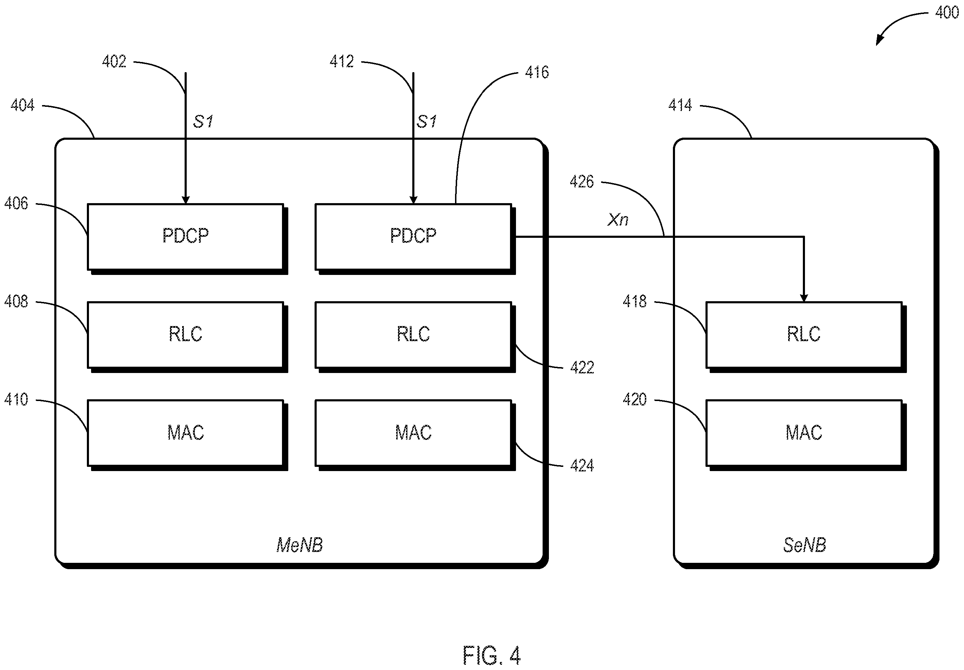

Figures 2-4 show various protocol stacks that a wireless system (such as an EPC or UE) can use to communicate over a wireless medium. Figure 2 shows a single connectivity example. Figure 3 shows an example in what is known as option 1A in a dual connectivity environment and includes packet routing before the PDCP layer. Figure 4 shows an example in what is known as option 3C in a dual connectivity environment and includes packet routing in the PDCP layer, which can also allow a bearer split.

Figure 2 shows a protocol architecture in a single connectivity example. When a UE (such as a UE 102 from Figure 1) requests for establishment of a bearer, the network will set up a bearer based on QCI and data will be sent via a different bearer based on the QCI. Packets received from the application layer 202 on a user plane are provided to the PDCP layer 208.

The PDCP layer can add a PDCP header, perform IP header compression, transfer user data and maintain sequence numbers for radio bearers. After it operates on packets, the PDCP layer 208 provides the packet to a radio link control (RLC) layer 210.

The RLC layer 210 includes functionality to provide an automatic repeat request (ARQ) fragmentation protocol; transfer of upper layer protocol data units (PDUs); concatenation, segmentation and reassembly of RLC service data units (SDUs); re-segmentation of RLC data PDUs, and in-sequence delivery of upper layer PDUs; duplicate detection, protocol error detection and recovery; and RLC SDU discard and/or RLC reestablishment. After the RLC layer 210 operates on packets, the RLC layer 210 provides the packets to a medium access control (MAC) layer 212.

The MAC layer 212 can provide mapping between logical channels and transport channels, multiplexing/demultiplexing of MAC SDUs belonging to logical channels into/from transport blocks to/from the physical (PHY) layer 214 on transport channels, error correction through hybrid automatic repeat request (HARQ), priority handling between logical channels, and priority handling between UEs by dynamic scheduling and/or transport format selection. After the MAC layer 212 operates on packets, the MAC layer 212 provides the packets to the PHY layer 214. Thy PHY layer 214 translates the packets received from the MAC layer 212 into electrical signals to transmit over a wireless medium.

Packets can also be routed through a control plane. Control information can be passed from the application layer 202 to a mobility management entity (MME) layer 204. The MME layer 204 can provide services such as bearer activation/deactivation, paging, tagging and user authentication. Control information can then be passed from the MME layer 204 to a radio resource layer (RRC) 206. RRC layer 206 can provide functions that include broadcasting system information related to non-access stratum (NAS) or access stratum (AS), paging, configuring RRC connections between UE and E-UTRAN, security functions, configuring of radio bearers, mobility functions, QoS management and UE measurement reporting.

With respect to dual connectivity, architecture option 1A is shown in Figure 3 without a bearer split and option 3C is shown in Figure 4 with a bearer split. In both architectures a UE is connected to a MeNB 404 and a SeNB 414. Without further configuration, there is no filtering based on application to send the data to the UE via MeNB 404 and SeNB 414. An application based filter can be added to split incoming data 412 into two data flows (one flow goes to MeNB and one flow goes to SeNB). This filter can reside in PDCP layer 416 in option 3C shown in Figure 4 or before PDCP layers 306 and 316 (e.g., on top of a PDCP layer) in option 1A shown in Figure 3, or even in the S-GW (not shown). This filter can be configured (such as by the MeNB 404 or the MME). The filter can be pre-configured (such as selecting a pre-made filter based on known or predicted application demands) or configured upon enablement (such as by receiving configuration information by current applications).

Figure 4 shows a protocol stack that receives data 402 and 412 from two bearers, one of which is split (the bearer containing data 412). Data 402 travels a path through PDCP layer 406 to RLC layer 408 to MAC layer 410 and out through a PHY layer of the MeNB 404. Data 412, however, is filtered at the PDCP layer 416 by a packet filter. Some data passes through the MeNB 404 through PDCP layer 416, RLC layer 422, MAC layer 424 and out through a PHY layer of the MeNB 404. Part of data 412 is split from MeNB to SeNB at PDCP layer 416 and sent over link Xn 426 to SeNB 414. The SeNB 414 then passes the data through RLC layer 418, MAC layer 420 and out through a PHY layer of the SeNB 414.

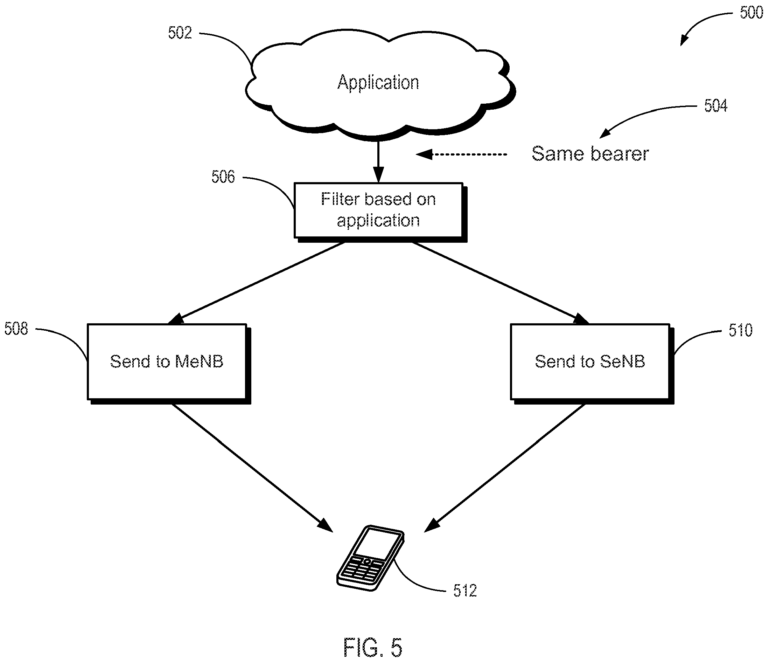

In Figure 5, an example of a filter 506 is shown splitting a same bearer 504 into two flows based on the application in system 500. Such application data flow is sent to a UE 512 via different eNBs 508 and 510 through dual connectivity. The routing of the flow can be based on a load and a coverage of each eNB 508 and 510. For instance, a MeNB 508 is selected to have more reliable and larger coverage than a selected SeNB 510. However, the MeNB 508 can be more overloaded than SeNB 510. Therefore application traffic requiring a higher reliability (such as an increase in coverage area, a decreased chance of losing connection, decreased latency, etc.) can be sent over the MeNB 508 (such as voice traffic), while traffic requiring a higher throughput can be sent over the SeNB 510 (such as video data).

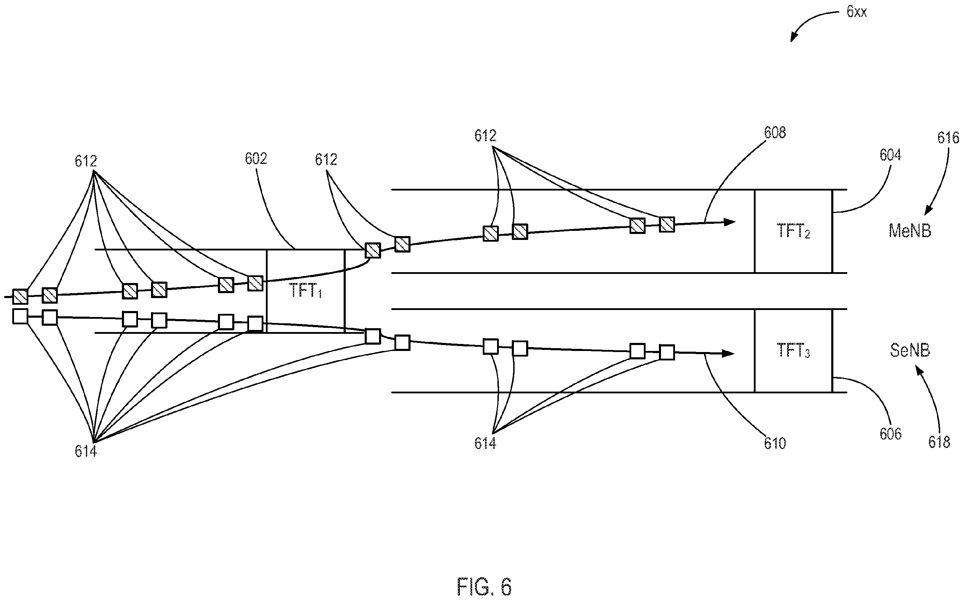

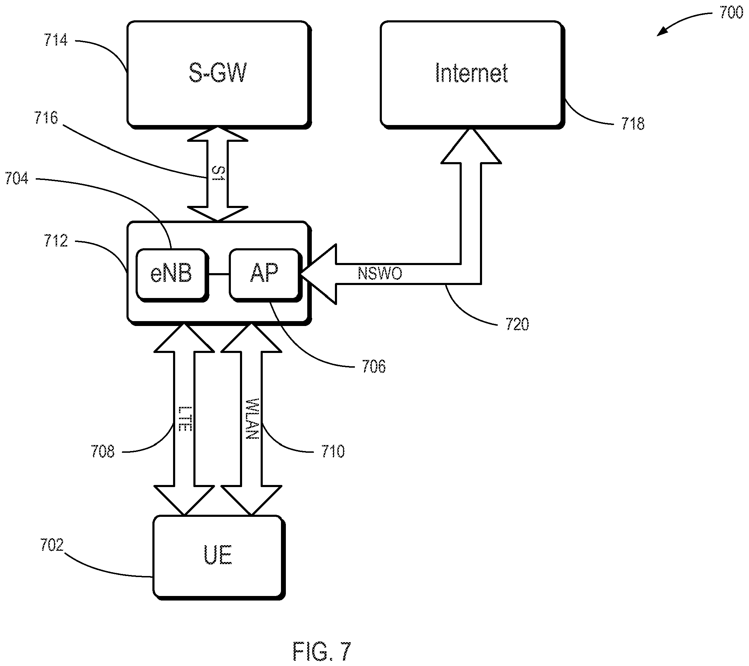

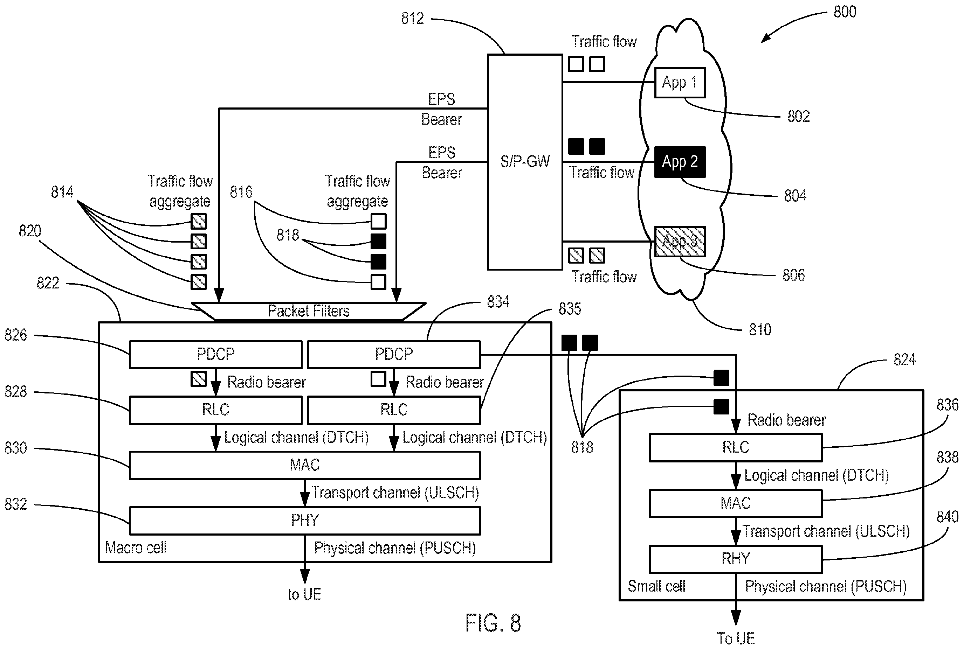

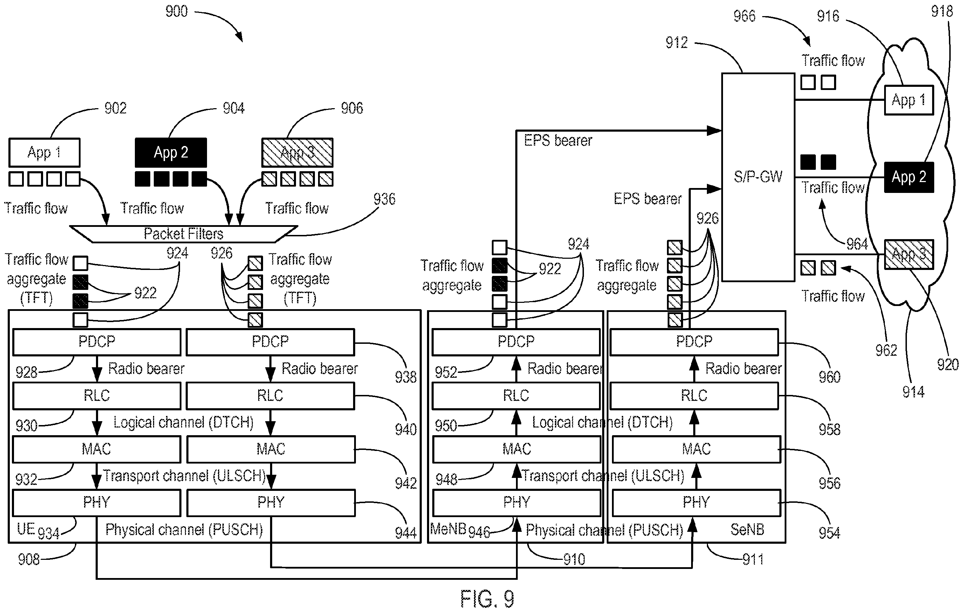

Figures 6 through 9 show example embodiments and examples that use application dependent filtering in dual connectivity for application specific routing. Figures 6 and 7 show examples of high-level views of systems using application specific routing, while Figures 8 and 9 show more detailed embodiments and examples of routing. Five example embodiments and examples are described below that can be used for application specific routing (although these embodiments and examples are not meant to be exhaustive and combinations thereof can be created): (1) a QCI table can be extended; (2) an application table can be created; (3) TFTs can be extended; (4) multiple TFTs can be used for a single bearer and (5) other networks can be used. While the embodiments and examples described herein may focus on enhancements to a MeNB, it should be recognized that these enhancements can also be applied in a P-GW (including examples of dual connectivity as shown in Figure 3).

The Figures will be examined in the order of Figure 6, Figures 8-9 and then Figure 7, as aspects based on Figure 7 can be also applied to Figures 8 and 9. For example, extended TFTs or multiple TFTs can be used in conjunction with WLAN technologies in a dual connectivity system.

In an example (1), an existing QCI table (such as Table 1) can be extended such that each application type is added into a QCI value. When using a QCI table based example for application dependent filtering, more bearers will be set up. With a bearer split in dual connectivity, a MeNB will select a bearer and offload the bearer to a SeNB. For example, Table 1 describes nine QCI classes. Additional classes can be defined for application types, such as latency tolerant game caching (e.g., background downloading of large amounts of game content) and real-time gaming updates (e.g., small amounts of real-time position and action information). Using extended QCI with packet filters can allow application specific filtering.

**Table 1 - Example QCI Table and Characteristics**

| **QCI** | **Resource Type** | **Priority** | **Packet Delay Budget (NOTE 1)** | **Packet Error Loss Rate (NOTE 2)** | **Example Services** |
|---|---|---|---|---|---|
| 1 (NOTE 3) | GBR | 2 | 100 ms | 10⁻² | Conversational Voice |
| 2 (NOTE 3) | | 4 | 150 ms | 10⁻³ | Conversational Video (Live Streaming) |
| 3 (NOTE 3) | | 3 | 50 ms | 10⁻³ | Real Time Gaming |
| 4 (NOTE 3) | | 5 | 300 ms | 10⁻⁶ | Non-Conversational Video (Buffered Streaming) |
| 5 (NOTE 3) | Non-GBR | 1 | 100 ms | 10⁻⁶ | IMS Signalling |
| 6 (NOTE 4) | | 6 | 300 ms | 10⁻⁶ | Video (Buffered Streaming) TCP-Based (e.g., www, e-mail, chat, ftp, p2p file sharing, progressive video, etc.) |
| 7 (NOTE 3) | | 7 | 100 ms | 10⁻³ | Voice, Video (Live Streaming) Interactive Gaming |
| 8 (NOTE 5) | | 8 | 300 ms | 10⁻⁶ | Video (Buffered Streaming) TCP-Based (e.g., www, e-mail, chat, ftp, p2p file sharing, progressive video, etc.) |
| 9 (NOTE 6) | | 9 | | | |
| NOTE 1: A delay of 20 ms for the delay between a PCEF and a radio base station should be subtracted from a given PDB to derive the packet delay budget that applies to the radio interface. This delay is the average between the case where the PCEF is located "close" to the radio base station (roughly 10 ms) and the case where the PCEF is located "far" from the radio base station, e.g., in case of roaming with home routed traffic (the one-way packet delay between Europe and the U.S. west coast is roughly 50 ms). The average takes into account that roaming is a less typical scenario. It is expected that subtracting this average delay of 20 ms from a given PDB will lead to desired end-to-end performance in most typical cases. Also, note that the PDB defines an upper bound. Actual packet delays - in particular for GBR traffic - should typically be lower than the PDB specified for a QCI as long as the UE has sufficient radio channel quality. | | | | | |
| NOTE 2: The rate of non-congestion related packet losses that may occur between a radio base station and a PCEF should be regarded to be negligible. A PELR value specified for a standardized QCI therefore applies completely to the radio interface between a UE and radio base station. | | | | | |
| NOTE 3: This QCI is typically associated with an operator controlled service, i.e., a service where the SDF aggregate's uplink / downlink packet filters are known at the point in time when the SDF aggregate is authorized. In case of E-UTRAN this is the point in time when a corresponding dedicated EPS bearer is established / modified. | | | | | |
| NOTE 4: If the network supports Multimedia Priority Services (MPS) then this QCI could be used for the prioritization of non-real-time data (i.e., most typically TCP-based services/applications) of MPS subscribers. | | | | | |
| NOTE 5: This QCI could be used for a dedicated "premium bearer" (e.g., associated with premium content) for any subscriber / subscriber group. Also in this case, the SDF aggregate's uplink / downlink packet filters are known at the point in time when the SDF aggregate is authorized. Alternatively, this QCI could be used for the default bearer of a UE/PDN for "premium subscribers." | | | | | |
| NOTE 6: This QCI is typically used for the default bearer of a UE/PDN for non-privileged subscribers. Note that AMBR can be used as a "tool" to provide subscriber differentiation between subscriber groups connected to the same PDN with the same QCI on the default bearer. | | | | | |

In example (2) an application table can be used as shown in Table 2. An application filter like functionality is created to filter packets based on the application mapping table entries which can be pre-assigned to either MeNB or SeNB. In one example, the mapping table entries are based on IP information (such as an IP address). The packet filters can determine whether to route packets to a MeNB or SeNB based on the IP address information.

In one example, an application mapping table can provide functionality to filter data flow within the bearer (such as shown in Figure 5 in filter 506). An application mapping table can map an application entry to an IP address. For example, the application table contains different applications so that an IP to application mapping can be created at the setup. Table 2 is an example of the application table, but the number of applications and kind of applications should not be limited to what is shown.

**Table 2 - Example Application Mapping Table**

| | |
|---|---|
| 0 | Voice IMS |
| 1 | Video IMS |
| 2 | SMS |
| 3 | Internet gaming |
| 4 | Disaster message board |
| 5 | Email |
| 6 | Web browser |
| 7 | IP Address |
| ... | ... |

In another embodiment and example (3), current traffic flow templates (TFTs) can be extended to provide application dependent filtering. A TFT is used to define different types of application data paths using packet filters. For example, an extended TFT can filter port 80 for http traffic and send through a MeNB while other traffic is sent through a SeNB. Multiple configurations can be configured to a TFT. For example, a packet filter can be use the following contents:

| | |
|---|---|
| 0 0 0 1 0 0 0 0 | IPv4 remote address type |
| 0 0 0 1 0 0 0 1 | IPv4 local address type |
| 0 0 1 0 0 0 0 0 | IPv6 remote address type |
| 0 0 1 0 0 0 0 1 | IPv6 remote address/prefix length type |
| 0 0 1 0 0 0 1 1 | IPv6 local address/prefix length type |
| 0 0 1 1 0 0 0 0 | Protocol identifier/Next header type |
| 0 1 0 0 0 0 0 0 | Single local port type |
| 0 1 0 0 0 0 0 1 | Local port range type |
| 0 1 0 1 0 0 0 0 | Single remote port type |
| 0 1 0 1 0 0 0 1 | Remote port range type |
| 0 1 1 0 0 0 0 0 | Security parameter index type |
| 0 1 1 1 0 0 | Type of service/Traffic class type |
| 1 0 0 0 0 0 0 0 | Flow label type |
| 1 0 0 0 0 0 0 1 | Macro cell or Small cell transmission preferred |
| All other values can be reserved | |

In another example a traffic flow/packet filter can be associated to the preferred cell type. One way of implementing this association between the packet filter and the preferred cell type is to associate a QoS parameter field to each packet filter identifier. This can be accomplished by adding the QoS parameters field in the "packet filter list" e.g., [3GPP TS 24.008: Core network protocols; Stage 3], as shown in Table 3 below

**Table 3 - Packet filter list when the TFT operation is "create new TFT", or "add packet filters to existing TFT" or "replace packet filters in existing TFT"**

| 8 | 7 | 6 | 5 | 4 | 3 | 2 | 1 |
|---|---|---|---|---|---|---|---|
| 0 | 0 | Packet filter direction 1 | | Packet filter identifier 1 | | | |
| Spare | | | | | | | |
| Packet filter evaluation precedence 1 | | | | | | | |
| Length of Packet filter contents 1 | | | | | | | |
| Packet filter contents 1 | | | | | | | |
| Preferred cell type 1 | | | | | | | |

| 0 | 0 | Packet filter direction 2 | | Packet filter identifier 2 | | | |
|---|---|---|---|---|---|---|---|
| Spare | | | | | | | |
| Packet filter evaluation precedence 2 | | | | | | | |
| Length of Packet filter contents 2 | | | | | | | |
| Packet filter contents 2 | | | | | | | |
| Preferred cell type 2 | | | | | | | |
| ... | | | | | | | |

| 0 | 0 | Packet filter direction N | | Packet filter identifier N | | | |
|---|---|---|---|---|---|---|---|
| Spare | | | | | | | |
| Packet filter evaluation precedence N | | | | | | | |
| Length of Packet filter contents N | | | | | | | |
| Packet filter contents N | | | | | | | |
| Preferred cell type N | | | | | | | |

Optionally, this could be done by adding a list of s in the Traffic Flow Template [3GPP TS 24.008: Core network protocols; Stage 3] as shown in Table 4below

**Table 4 - Traffic flow template information element**

| 8 | 7 | 6 | 5 | 4 | 3 | 2 | 1 |
|---|---|---|---|---|---|---|---|
| Traffic flow template IEI | | | | | | | |
| Length of traffic flow template IE | | | | | | | |

| TFT operation code | | | E bit | Number of packet filters | | | |
|---|---|---|---|---|---|---|---|
| Packet filter list | | | | | | | |
| Parameters list | | | | | | | |
| Preferred cell type list | | | | | | | |

In another embodiment and example (4) multiple TFTs are configured to a single bearer. For example, a set of packets may satisfy the criteria of two TFTs. However, a TFT that is more restrictive can be used to determine which packets are routed to a secondary link (such as a SeNB).

In a single connectivity environment, one evolved packet system (EPS) bearer maps to one TFT. With the extended TFTs in a dual connectivity environment, the network (such as a MeNB) can set two or more TFTs to map to a single bearer. Under a dual connectivity bearer split, each split bearer is associated with one of the TFTs.

For example, in Figure 6, TFT1 602 is divided into TFT2 604 and TFT3 606 (which can be written as TFT1 = TFT2+TFT3). As packets 612 and 614 flow through TFT1 602 arriving into the MeNB, a packet filter separates the flow into flows 608 and 610 based on application information (such as IP address or application table entry). Packets 612 having a first application characteristic are associated with TFT2 604 and routed through MeNB 616. Packets 614 having a second application characteristic are associated with TFT3 606 and routed through SeNB 618.

In another example, when SeNB 618 is added by MeNB 616, a TFT is configured and applied to one or more bearers that MeNB 616 decides to offload to SeNB 618. This TFT is re-configured such that an application dependent packet is filtered and offloaded to SeNB 618. In Figure 6, for example, when SeNB 618 is added, MeNB 616 will configure TFT3 606 along with the bearer. The packet filters associated in TFT3 606 have to be a subset of TFT1 602. To do that, MeNB 616 can add, delete or modify packet filters in TFT. Similarly, MeNB 616 can modify the existing TFT2 604.

In another example of embodiment (4), as according to the invention, an eNB configures multiple TFTs for a single bearer when a SeNB is added. The eNB can follow the following operations: (1) when a single bearer (denoted B1) is established, a TFT (denoted TFT1) is configured; (2) upon adding a SeNB, bearer B1 is split into two bearers (denoted B2 and B3) (B2 is a bearer that connects to MeNB and B3 is a bearer that connects to SeNB); (3) a new TFT (denoted TFT3) is configured to B3 and this new TFT is also automatically configured to B1; and (4) when the SeNB is released, TFT3 is removed from B1 as well.

An example of a split bearer system 800 can be seen in Figure 8. An application server 810 creates three application specific data flows that include packets 814, 816 and 818. The application server 810 transmits the packets 814, 816 and 818 through S/P-GW 812 to macro cell 822. Macro cell 822 determines which packets are transmitted by the macro cell 822 to a UE and those packets are offloaded to small cell 824 for transmission to the UE.

Within application server 810, different application specific data flows are created. Application 1 (802) creates packets 816. Application 2 (804) creates packets 818. Application 3 (806) creates packets 814. S/P-GW 812 receives these traffic flows and associates the flows with EPS bearers. Packets 814 form part of a first EPS bearer and a first traffic flow aggregate. Packets 816 and 818 form part of a second bearer and a corresponding second traffic flow aggregate.

One or more packet filters 820 receive these traffic flow aggregates at the macro cell 822 and route packets to a PDCP layer 826 or 834 (such as based on EPS bearer). Packets 814 are routed to PDCP layer 826 and are assigned a radio bearer. These packets 814 are then assigned a logical channel (dedicated traffic channel) in the RLC layer 828. The packets 814 then continue being processed through the MAC layer 830 (assigned a traffic channel - uplink shared channel (ULSCH)) and PHY layer 832 (assigned a physical channel - physical uplink shared channel (PUSCH)) for transmission to the UE.

Packets 816 are routed to PDCP layer 834 and are assigned a radio bearer. A packet filter within the PDCP layer 834 determines that packets 816 are to be transmitted by the macro cell 822 to the UE. These packets 816 are then assigned a logical channel (dedicated traffic channel) in the RLC layer 835. The packets 816 then continue being processed through the MAC layer 830 (assigned a traffic channel - ULSCH) and PHY layer 832 (assigned a physical channel - PUSCH) for transmission to the UE.

Packets 818 are routed to PDCP layer 834. A packet filter within the PDCP layer 834 determines that packets 816 are to be transmitted by the small cell 824 to the UE, resulting in a bearer split. The packets 818 are transmitted to small cell 824 to RLC layer 835 and are assigned a radio bearer. These packets 818 are then assigned a logical channel (dedicated traffic channel) in the RLC layer 835. The packets 816 then continue being processed through the MAC layer 838 (assigned a traffic channel - ULSCH) and PHY layer 840 (assigned a physical channel - PUSCH) for transmission to the UE.

In one example, a system 800 can be used to transfer data (such as video information) over a high speed link (that may not be as reliable as the macro cell 822 link) through the small cell 824, that may have a small coverage area. However, data corresponding to applications that need higher reliability (such as obtained through a larger coverage area but slower link speed) can be transferred over the macro cell 822 link.

An example of application dependent filtering system 900 can be seen in Figure 9. Application specific packets 922, 924 and 926 are generated from applications 902, 904 and 906 on UE 908. A packet filter 936 routes packets 922, 924 to a first wireless interface for transmission to SeNB 911 based on application specific attributes. The packet filter 936 routes packets 926 to a second wireless interface for transmission to MeNB 910. MeNB 910 and SeNB 911 transmit the packets 922, 924 and 926 to S/P-GW 912. S/P-GW 912 transmits traffic flows 962, 964 and 966 to service 914 that includes application 1 (916), application 2 (918) and application 3 (920).

As the packet filter 936 resides above PDCP layers 928 and 938, traffic flow aggregates can be formed by TFTs (a first TFT that includes packets 922 and 924 and a second TFT that includes packets 926). Packets 922 and 924 flow through PDCP layer 928 (becoming associated with a radio bearer) through RLC layer 930 (becoming associated with a logical channel (DTCH)) through MAC layer 932 (becoming associated with a transport channel (ULSCH)) and through the PHY layer 934 (becoming associated with a physical channel (PUSCH)) to be transmitted to MeNB 910. Packets 926 flow through a second protocol stack through PDCP layer 938 (becoming associated with a radio bearer) through RLC layer 940 (becoming associated with a logical channel (DTCH)) through MAC layer 942 (becoming associated with a transport channel (ULSCH)) and through the PHY layer 944 (becoming associated with a physical channel (PUSCH)) to be transmitted to SeNB 911.

The packets 922, 924 and 926 are received by MeNB 910 and SeNB 911 and sent to S/P-GW 912, which can provide the packets to service 914 that includes application 1 (916), application 2 (918) and application 3 (920). A transmission from UE 908 to SeNB 911 based on packets 926 is routed through PHY layer 946 to MAC layer 948 to RLC layer 950 to PDCP layer 952 and then through an EPS bearer to S/P-GW 912 which routes packets 926 to application 920 (becoming traffic flow 962). A transmission from UE 908 to MeNB 910 based on packets 922 and 924 is routed through PHY layer 954 to MAC layer 956 to RLC layer 958 to PDCP layer 960 and then through an EPS bearer to S/P-GW 912 which routes packets 922 and 924 to applications 916 and 918 (becoming traffic flows 966 and 964).

For example, UE is running a GPS voice directions application. Current positioning information is reported by application 1 (902 on UE 908 and 916 on service 914). Voice directions are handled by application 2 (904 on UE 908 and 918 on service 914). A background map cache is provided by application 3 (906 on UE 908 and 920 on service 914). Positioning information (packets 924) and voice directions (packets 924) can be timing and reliability sensitive (as routes may need to be recalculated). However, a background map cache (packets 926) can be quickly loaded and stored for later use, allowing for high current data rates, but more unreliable connections if small updates are needed. MeNB 946 can determine that application 3 (906 on UE 908 and 920 on service 914) can make use of SeNB 911 and enables SeNB 911 for use (such as a request to turn on and/or accept connections from UE 908). MeNB 910 can then configure packet filters 936 or enable existing packet filters 936 (on both UE 908 and EPC, such as MeNB 910) to filter packets based on application based criteria (such as IP address, application of origin, etc.). Positioning information (packets 924) and voice directions (packets 922) are routed over a more robust (but potentially slower) link to MeNB 910 by packet filter 936. Background map cache (packets 926) are routed over a less robust (but potentially faster) link to SeNB 911 by packet filter 936.

In one embodiment and example (5), the packet filter also can be applied when the UE connects or dual connects to WLAN (e.g., Wi-Fi) networks. The eNB will configure the TFT and associated packet filters on the LTE bearer and WLAN link. For example, Figure 7 shows an example of dual connectivity of a UE 702 with an eNB 704 in using licensed spectrum (LTE 708) and a WLAN AP 706 using unlicensed spectrum (WLAN 710). Data from bearer S1 716 that is received from S-GW 714 can be split between eNB 704 and AP 706 based on application information (such as through a TFT, application table, QCI table, etc.). Internet access 718 can also be provided through a non-seamless WLAN offload (NSWO) link 720. In some examples the eNB 704 and AP 706 form a transmission unit 712. The eNB 704 and AP 706 share a link. The eNB 704 can offload traffic to the AP 706 using a packet filter based on application specific information (such as seen in Figure 4).

The WLAN technology can be used instead of an SeNB (as seen in Figures 8 and 9). For example, extended TFTs (as discussed in embodiment 4) or multiple TFTs (as discussed in embodiment 5).

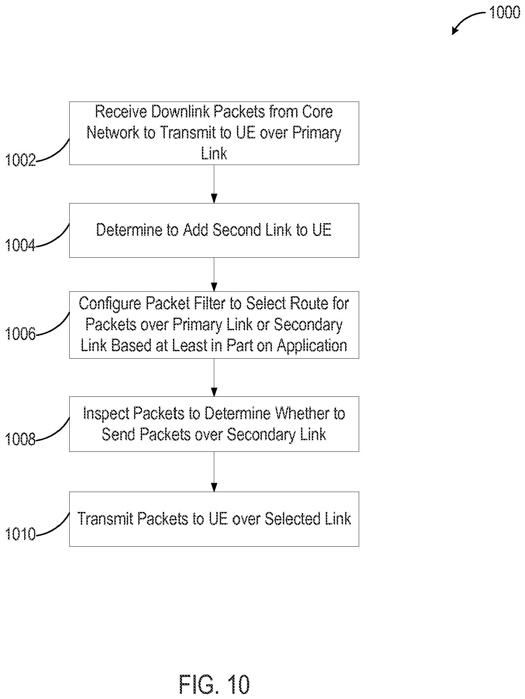

Figure 10 shows a method 1000 for application specific routing in dual connectivity. The method can be accomplished by systems such as those shown in Figure 1, including anchor tower 104, small cell transceiver 106, UE 102, network infrastructure 118 (such as MME, etc.). In box 1002, a MeNB can receive downlink packets from the core network to transmit to a UE over a primary link (such as over licensed spectrum using LTE). In box 1004, MeNB (or in some cases MME or other part of EPC) determines to add a second link to the UE (which can be due to application specific demands). In box 1006, a packet filter is configured on UE and MeNB to select a route over the primary link or secondary link based on application information (such as IP address, application table, etc.). Consistent with embodiments, the packet filters are used in conjunction with TFTs. In box 1008, downlink packets are inspected by packet filters to determine whether to send the packets over the secondary link (such as a SeNB link, WLAN link, mmWave link, etc.) or primary link. In box 1010, packets are routed to the selected link and transmitted to the UE.

In another example, a UE can receive a message from a MeNB to connect to a SeNB. The UE can connect to the SeNB and enable a packet filter (which can be selected from pre-configured packet filters, received from the MeNB or other part of an EPC, or dynamically configured based on application information or demand information). Packets from the UE can be received by the packet filter and directed to a primary wireless interface (connected to the MeNB) or a secondary wireless interface (connected with the SeNB) based on application information. This can result in a split radio bearer.

It should be recognized that a primary link and secondary link can be selected from various technologies and implementations. For example, a primary link can include protocols (LTE, LTE-U (LTE over unlicensed spectrum, which is sometimes referred to as licensed assisted access (LAA)), WLAN (also referred to as Wi-Fi™), mmWave, etc.), spectrum (licensed spectrum, unlicensed spectrum, shared spectrum, etc.) and other technologies. A secondary link can include the same protocols, spectrum and technologies. For example, in some embodiments, a primary link can be WLAN over unlicensed spectrum and a secondary link can be mmWave technology over licensed spectrum. Descriptions applied to a MeNB and SeNB can be applied to other wireless transceivers (such as a WLAN AP, mmWave transceiver, etc.).

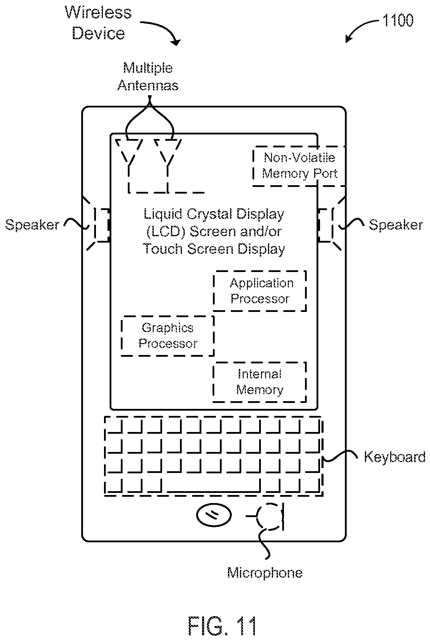

Figure 11 is an example illustration of a mobile device, such as a UE, a mobile station (MS), a mobile wireless device, a mobile communication device, a tablet, a handset, or another type of mobile wireless device. The mobile device can include one or more antennas configured to communicate with a transmission station, such as a base station (BS), an eNB, a base band unit (BBU), a remote radio head (RRH), a remote radio equipment (RRE), a relay station (RS), a radio equipment (RE), or another type of wireless wide area network (WWAN) access point. The mobile device can be configured to communicate using at least one wireless communication standard including 3GPP LTE, WiMAX, HSPA, Bluetooth, and Wi-Fi. The mobile device can communicate using separate antennas for each wireless communication standard or shared antennas for multiple wireless communication standards. The mobile device can communicate in a WLAN, a wireless personal area network (WPAN), and/or a WWAN.

Figure 11 also provides an illustration of a microphone and one or more speakers that can be used for audio input and output from the mobile device. The display screen can be a liquid crystal display (LCD) screen or other type of display screen, such as an organic light emitting diode (OLED) display. The display screen can be configured as a touch screen. The touch screen can use capacitive, resistive, or another type of touch screen technology. An application processor and a graphics processor can be coupled to internal memory to provide processing and display capabilities. A non-volatile memory port can also be used to provide data input/output options to a user. The non-volatile memory port can also be used to expand the memory capabilities of the mobile device. A keyboard can be integrated with the mobile device or wirelessly connected to the mobile device to provide additional user input. A virtual keyboard can also be provided using the touch screen.

Computing systems as discussed herein (such as UEs, eNBs, WLAN APs, systems that include processors, etc.) can be viewed as an information passing bus that connects various components. A computing system includes a processor having logic for processing instructions. Instructions can be stored in and/or retrieved from memory and a storage device that includes a computer-readable storage medium. Instructions and/or data can arrive from a network interface that can include wired or wireless capabilities. Instructions and/or data can also come from an I/O interface that can include such things as expansion cards, secondary buses (e.g., USB, etc.), devices, etc. A user can interact with the computing system through user interface devices and a rendering system that allows the computer to receive and provide feedback to the user.

Embodiments and implementations of the systems and methods described herein may include various operations, which may be embodied in machine-executable instructions to be executed by a computer system. A computer system may include one or more general-purpose or special-purpose computers (or other electronic devices). The computer system may include hardware components that include specific logic for performing the operations or may include a combination of hardware, software, and/or firmware.

Computer systems and the computers in a computer system may be connected via a network. Suitable networks for configuration and/or use as described herein include one or more local area networks, wide area networks, metropolitan area networks, and/or Internet or IP networks, such as the World Wide Web, a private Internet, a secure Internet, a value-added network, a virtual private network, an extranet, an intranet, or even stand-alone machines which communicate with other machines by physical transport of media. In particular, a suitable network may be formed from parts or entireties of two or more other networks, including networks using disparate hardware and network communication technologies.

One suitable network includes a server and one or more clients; other suitable networks may contain other combinations of servers, clients, and/or peer-to-peer nodes, and a given computer system may function both as a client and as a server. Each network includes at least two computers or computer systems, such as the server and/or clients. A computer system may include a workstation, laptop computer, disconnectable mobile computer, server, mainframe, cluster, so-called "network computer" or "thin client," tablet, smart phone, personal digital assistant or other hand-held computing device, "smart" consumer electronics device or appliance, medical device, or a combination thereof.

Suitable networks may include communications or networking software, such as the software available from Novell®, Microsoft®, and other vendors, and may operate using TCP/IP, SPX, IPX, and other protocols over twisted pair, coaxial, or optical fiber cables, telephone lines, radio waves, satellites, microwave relays, modulated AC power lines, physical media transfer, and/or other data transmission "wires" known to those of skill in the art. The network may encompass smaller networks and/or be connectable to other networks through a gateway or similar mechanism.

Various techniques, or certain aspects or portions thereof, may take the form of program code (i.e., instructions) embodied in tangible media, such as floppy diskettes, CD-ROMs, hard drives, magnetic or optical cards, solid-state memory devices, a nontransitory computer-readable storage medium, or any other machine-readable storage medium wherein, when the program code is loaded into and executed by a machine, such as a computer, the machine becomes an apparatus for practicing the various techniques. In the case of program code execution on programmable computers, the computing device may include a processor, a storage medium readable by the processor (including volatile and nonvolatile memory and/or storage elements), at least one input device, and at least one output device. The volatile and nonvolatile memory and/or storage elements may be a RAM, an EPROM, a flash drive, an optical drive, a magnetic hard drive, or other medium for storing electronic data. The eNB (or other base station) and UE (or other mobile station) may also include a transceiver component, a counter component, a processing component, and/or a clock component or timer component. One or more programs that may implement or utilize the various techniques described herein may use an application programming interface (API), reusable controls, and the like. Such programs may be implemented in a high-level procedural or an object-oriented programming language to communicate with a computer system. However, the program(s) may be implemented in assembly or machine language, if desired. In any case, the language may be a compiled or interpreted language, and combined with hardware implementations.

Each computer system includes one or more processors and/or memory; computer systems may also include various input devices and/or output devices. The processor may include a general purpose device, such as an Intel®, AMD®, or other "off-the-shelf' microprocessor. The processor may include a special purpose processing device, such as ASIC, SoC, SiP, FPGA, PAL, PLA, FPLA, PLD, or other customized or programmable device. The memory may include static RAM, dynamic RAM, flash memory, one or more flip-flops, ROM, CD-ROM, DVD, disk, tape, or magnetic, optical, or other computer storage medium. The input device(s) may include a keyboard, mouse, touch screen, light pen, tablet, microphone, sensor, or other hardware with accompanying firmware and/or software. The output device(s) may include a monitor or other display, printer, speech or text synthesizer, switch, signal line, or other hardware with accompanying firmware and/or software.

It should be understood that many of the functional units described in this specification may be implemented as one or more components, which is a term used to more particularly emphasize their implementation independence. For example, a component may be implemented as a hardware circuit comprising custom very large scale integration (VLSI) circuits or gate arrays, or off-the-shelf semiconductors such as logic chips, transistors, or other discrete components. A component may also be implemented in programmable hardware devices such as field programmable gate arrays, programmable array logic, programmable logic devices, or the like.

Components may also be implemented in software for execution by various types of processors. An identified component of executable code may, for instance, comprise one or more physical or logical blocks of computer instructions, which may, for instance, be organized as an object, a procedure, or a function. Nevertheless, the executables of an identified component need not be physically located together, but may comprise disparate instructions stored in different locations that, when joined logically together, comprise the component and achieve the stated purpose for the component.

Indeed, a component of executable code may be a single instruction, or many instructions, and may even be distributed over several different code segments, among different programs, and across several memory devices. Similarly, operational data may be identified and illustrated herein within components, and may be embodied in any suitable form and organized within any suitable type of data structure. The operational data may be collected as a single data set, or may be distributed over different locations including over different storage devices, and may exist, at least partially, merely as electronic signals on a system or network. The components may be passive or active, including agents operable to perform desired functions.

Several aspects of the embodiments described will be illustrated as software modules or components. As used herein, a software module or component may include any type of computer instruction or computer-executable code located within a memory device. A software module may, for instance, include one or more physical or logical blocks of computer instructions, which may be organized as a routine, program, object, component, data structure, etc., that perform one or more tasks or implement particular data types. It is appreciated that a software module may be implemented in hardware and/or firmware instead of or in addition to software. One or more of the functional modules described herein may be separated into sub-modules and/or combined into a single or smaller number of modules.

In certain embodiments, a particular software module may include disparate instructions stored in different locations of a memory device, different memory devices, or different computers, which together implement the described functionality of the module. Indeed, a module may include a single instruction or many instructions, and may be distributed over several different code segments, among different programs, and across several memory devices. Some embodiments may be practiced in a distributed computing environment where tasks are performed by a remote processing device linked through a communications network. In a distributed computing environment, software modules may be located in local and/or remote memory storage devices. In addition, data being tied or rendered together in a database record may be resident in the same memory device, or across several memory devices, and may be linked together in fields of a record in a database across a network.

## Claims

1. A primary enhanced node B, eNB (404, 822), for dual connectivity comprising:
a packet splitter (820) configured to split packets (922, 924, 926) associated with an EPS bearer (412) with a destination of a user equipment (102, 702, 908) into at least two streams of packets (922, 924, 926), a first stream (608) and a second stream (610); and
wherein the primary eNB (404, 822) is configured to communicate the first stream (608) over a first set of wireless frequencies to the user equipment (102, 702, 908); and to route the second stream (610) to the user equipment (102, 702, 908) through another, secondary eNB (414, 824);
**characterized in that**
the primary eNB (404, 822) is configured to map two TFTs (604, 606) to a single bearer; and
wherein the packet splitter (820) is further configured to assign packets of the packets (922, 924, 926) having application characteristic associated with a first TFT of said two TFTs to the first stream (608) and packets of the packets (922, 924, 926) having application characteristic associated with the other second TFT of said two TFTs to the second stream (610).

2. The primary eNB (404, 822) claim 1, wherein the packet splitter (820) is comprised in a PDCP layer (416) of the primary eNB (404, 822) and the primary eNB (404, 822) is configured to route the second stream (610) to the user equipment (102, 702, 908) through the other, secondary eNB (414, 824) via an Xn interface between the primary eNB (404, 822) and the other, secondary eNB (414, 824).

3. The primary eNB (404, 822) of claim 1 or 2, wherein the primary eNB (404, 822) is configured to communicate with the user equipment (102, 702, 908) over licensed frequencies of an 3GPP LTE-based system or over unlicensed frequencies according to a WLAN-based system.

4. A system comprising:
a gateway (812) configured to communicate packets (922, 924, 926) associated with an bearer with a destination of a user equipment (102, 702, 908);
a primary enhanced node B, eNB (404, 822), according to claim 1 or 2 and another, secondary eNB (414, 824) configured to communicate the second stream (610) over a second set of wireless frequencies to the user equipment (102, 702, 908).

5. The system of claim 4, wherein the other, secondary eNB (414, 824) is configured to communicate with the user equipment (102, 702, 908) over unlicensed frequencies.

6. The system of claim 4 or 5, wherein the other, secondary eNB (414, 824) is configured to communicate with the user equipment (102, 702, 908) over WLAN.

7. The system of one of claims 4 to 6, wherein the primary eNB (404, 822) is configured to communicate with the user equipment (102, 702, 908) over licensed frequencies of an 3GPP LTE-based system.

8. A computer-readable medium storing instructions that, when executed by a processor, cause a primary enhanced node B, eNB (404, 822), to:
split packets (922, 924, 926) associated with an EPS bearer (412) with a destination of a user equipment (102, 702, 908) into at least two streams of packets (922, 924, 926), a first stream (608) and a second stream (610);
communicate the first stream (608) over a first set of wireless frequencies to the user equipment (102, 702, 908); and
route the second stream (610) to the user equipment (102, 702, 908) through another, secondary eNB (414, 824);
**characterized in that** execution of the instructions further causes the primary eNB (404, 822) to:
map at least two TFTs (604, 606) to a single bearer; and
assign packets of the packets (922, 924, 926) having application characteristic associated with a first TFT of said two TFTs to the first stream (608) and packets of the packets (922, 924, 926) having application characteristic associated with the other second TFT of said two TFTs to the second stream (610).

## Patentansprüche

1. Primärer Enhanced Node B, eNB (404, 822), für duale Konnektivität umfassend:
einen Paketteiler (820), der so konfiguriert ist, dass er Pakete (922, 924, 926), die einem EPS-Träger (412) mit einem Ziel eines Benutzergeräts (102, 702, 908) zugeordnet sind, in mindestens zwei Ströme von Paketen (922, 924, 926), einen ersten Strom (608) und einen zweiten Strom (610), aufteilt; und
wobei der primäre eNB (404, 822) so konfiguriert ist, dass er den ersten Strom (608) über einen ersten Satz drahtloser Frequenzen an das Benutzergerät (102, 702, 908) kommuniziert; und den zweiten Strom (610) über einen anderen, sekundären eNB (414, 824) an das Benutzergerät (102, 702, 908) leitet;
**dadurch gekennzeichnet, dass**
der primäre eNB (404, 822) so konfiguriert ist, dass er zwei TFTs (604, 606) auf einen einzigen Träger abbildet; und
wobei der Paketteiler (820) ferner so konfiguriert ist, dass er Pakete der Pakete (922, 924, 926) mit einer Anwendungscharakteristik, die einem ersten TFT der zwei TFT's zugeordnet ist, dem ersten Strom (608) zuweist und Pakete der Pakete (922, 924, 926) mit einer Anwendungscharakteristik, die dem anderen zweiten TFT der zwei TFT's zugeordnet ist, dem zweiten Strom (610) zuweist.

2. Primärer eNB (404, 822) nach Anspruch 1, wobei der Paketteiler (820) in einer PDCP-Schicht (416) des primären eNB (404, 822) beinhaltet ist und der primäre eNB (404, 822) so konfiguriert ist, dass er den zweiten Strom (610) durch den anderen, sekundären eNB (414, 824) über eine Xn-Schnittstelle zwischen dem primären eNB (404, 822) und dem anderen sekundären eNB (414, 824) an das Benutzergerät (102, 702, 908) leitet.

3. Primärer eNB (404, 822) nach Anspruch 1 oder 2, wobei der primäre eNB (404, 822) so konfiguriert ist, dass er mit dem Benutzergerät (102, 702, 908) über lizensierte Frequenzen eines 3GPP LTE-basierten Systems oder über nicht lizenzierte Frequenzen gemäß einem WLAN-basierten System kommuniziert.

4. System umfassend:
ein Gateway (812), das konfiguriert ist, um Pakete (922, 924, 926), die einem Träger zugeordnet sind, mit einem Ziel eines Benutzergeräts (102, 702, 908) zu kommunizieren;
einen primären Enhanced Node B, eNB (404, 822) nach Anspruch 1 oder 2 und einen anderen, sekundärem eNB (414, 824), der so konfiguriert ist, dass er den zweiten Strom (610) über einen zweiten Satz drahtloser Frequenzen an das Benutzergerät (102, 702, 908) kommuniziert.

5. System nach Anspruch 4, wobei der andere, sekundäre eNB (414, 824) so konfiguriert ist, dass er mit dem Benutzergerät (102, 702, 908) über nicht lizenzierte Frequenzen kommuniziert.

6. System nach Anspruch 4 oder 5, wobei der andere, sekundäre eNB (414, 824) so konfiguriert ist, dass er mit dem Benutzergerät (102, 702, 908) über WLAN kommuniziert.

7. System nach einem der Ansprüche 4 bis 6, wobei der primäre eNB (404, 822) so konfiguriert ist, dass er mit dem Benutzergerät (102, 702, 908) über lizenzierte Frequenzen eines 3GPP-LTE-basierten Systems kommuniziert.

8. Computerlesbares Medium zum Speichern von Anweisungen, die, wenn sie von einem Prozessor ausgeführt werden, einen primären Enhanced Node B, eNB (404, 822), veranlassen zum:
Aufteilen von Paketen (922, 924, 926), die einem EPS-Träger (412) mit einem Ziel eines Benutzergeräts (102, 702, 908) zugeordnet sind, in mindestens zwei Ströme von Paketen (922, 924, 926), einen ersten Strom (608) und einen zweiten Strom (610);
Kommunizieren des ersten Stroms (608) über einen ersten Satz drahtloser Frequenzen an das Benutzergerät (102, 702, 908); und
Leiten des zweiten Stroms (610) an das Benutzergerät (102, 702, 908) über einen anderen, sekundären eNB (414, 824);
**dadurch gekennzeichnet, dass** Ausführen der Anweisungen ferner den primären eNB (404, 822) veranlasst zum:
Abbilden mindestens zwei TFTs (604, 606) auf einen einzigen Träger; und
Zuweisen von Paketen der Pakete (922, 924, 926) mit einer Anwendungscharakteristik, die einem ersten TFT der zwei TFTs zugeordnet ist, zu dem ersten Strom (608) und von Paketen der Pakete (922, 924, 926) mit Anwendungscharakteristik, die dem anderen zweiten TFT der zwei TFTs zugeordnet ist, zu dem zweiten Strom (610).

## Revendications

1. Un nœud B amélioré, eNB, primaire (404, 822) pour une double connectivité comprenant :
un séparateur de paquets (820) configuré pour séparer des paquets (922, 924, 926) associés à un bearer EPS (412) avec une destination d'un équipement utilisateur (102, 702, 908) en au moins deux flux de paquets (922, 924, 926), un premier flux (608) et un second flux (610) ; et dans lequel l'eNB primaire (404, 822) est configuré pour communiquer le premier flux (608) sur un premier ensemble de fréquences sans fil à l'équipement utilisateur (102, 702, 908) ; et pour router le second flux (610) vers l'équipement utilisateur (102, 702, 908) par l'intermédiaire d'un autre eNB, secondaire (414, 824) ;
**caractérisé en ce que**
l'eNB primaire (404, 822) est configuré pour mapper deux TFT (604, 606) vers un seul bearer ; et
dans lequel le séparateur de paquets (820) est en outre configuré pour assigner des paquets des paquets (922, 924, 926) ayant une caractéristique d'application associée à un premier TFT desdits deux TFT au premier flux (608) et des paquets des paquets (922, 924, 926) ayant une caractéristique d'application associée à l'autre second TFT desdits deux TFT au second flux (610).

2. L'eNB primaire (404, 822) selon la revendication 1, dans lequel le séparateur de paquets (820) est compris dans une couche PDCP (416) de l'eNB primaire (404, 822), et l'eNB primaire (404, 822) est configuré pour router le second flux (610) vers l'équipement utilisateur (102, 702, 908) par l'intermédiaire de l'autre eNB, secondaire (414, 824) via une interface Xn entre l'eNB primaire (404, 822) et l'autre eNB, secondaire (414, 824).

3. L'eNB primaire (404, 822) selon la revendication 1 ou 2, dans lequel l'eNB primaire (404, 822) est configuré pour communiquer avec l'équipement utilisateur (102, 702, 908) sur des fréquences sous licence d'un système basé sur LTE 3GPP ou sur des fréquences sans licence selon un système basé sur WLAN.

4. Un système comprenant :
une passerelle (812) configurée pour communiquer des paquets (922, 924, 926) associés à un bearer avec une destination d'un équipement utilisateur (102, 702, 908) ;
un nœud B amélioré, eNB, primaire (404, 822) selon la revendication 1 ou 2 et
un autre eNB, secondaire (414, 824) configuré pour communiquer le second flux (610) sur un second ensemble de fréquences sans fil à l'équipement utilisateur (102, 702, 908).

5. Le système selon la revendication 4, dans lequel l'autre eNB, secondaire (414, 824) est configuré pour communiquer avec l'équipement utilisateur (102, 702, 908) sur des fréquences sans licence.

6. Le système selon la revendication 4 ou 5, dans lequel l'autre eNB, secondaire (414, 824) est configuré pour communiquer avec l'équipement utilisateur (102, 702, 908) sur WLAN.

7. Le système selon l'une des revendications 4 à 6, dans lequel l'eNB primaire (404, 822) est configuré pour communiquer avec l'équipement utilisateur (102, 702, 908) sur des fréquences sous licence d'un système basé sur LTE 3GPP.

8. Un support lisible par ordinateur stockant des instructions qui, lorsqu'elles sont exécutées par un processeur, amènent un nœud B amélioré, eNB, primaire (404, 822), à :
séparer des paquets (922, 924, 926) associés à un bearer EPS (412) avec une destination d'un équipement utilisateur (102, 702, 908) en au moins deux flux de paquets (922, 924, 926), un premier flux (608) et un second flux (610) ;
communiquer le premier flux (608) sur un premier ensemble de fréquences sans fil à l'équipement utilisateur (102, 702, 908) ; et
router le second flux (610) vers l'équipement utilisateur (102, 702, 908) par l'intermédiaire d'un autre eNB, secondaire (414, 824) ;
**caractérisé en ce que** l'exécution des instructions amène en outre l'eNB primaire (404, 822) à :
mapper au moins deux TFT (604, 606) vers un seul bearer ; et
assigner des paquets des paquets (922, 924, 926) ayant une caractéristique d'application associée à un premier TFT desdits deux TFT au premier flux (608) et des paquets des paquets (922, 924, 926) ayant une caractéristique d'application associée à l'autre second TFT desdits deux TFT au second flux (610).
